(19) Europäisches Patentamt
European Patent Office
Office européen des brevets

(11) **EP 3 768 994 B1**

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **19711330.1**

(22) Anmeldetag: **14.03.2019**

(51) Internationale Patentklassifikation (IPC):
*F16H 55/08* (2006.01)   *F16H 1/28* (2006.01)
*F16H 1/46* (2006.01)   *F16H 1/26* (2006.01)

(52) Gemeinsame Patentklassifikation (CPC):
**F16H 55/0806; F16H 1/28;** F16H 1/26; F16H 1/46

(86) Internationale Anmeldenummer:
**PCT/EP2019/056389**

(87) Internationale Veröffentlichungsnummer:
**WO 2019/179869 (26.09.2019 Gazette 2019/39)**

(54) **PLANETENGETRIEBE MIT EINZAHNIGEM SONNENRAD MIT EVOLOIDVERZAHNUNG**

PLANETARY GEARBOX HAVING SINGLE-TOOTH SUN GEAR HAVING EVOLOID TOOTHING

ENGRENAGE PLANÉTAIRE POURVU D'UN PIGNON PLANÉTAIRE À UNE DENT AYANT UNE DENTURE ÉVOLOÏDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2018 DE 102018107021**

(43) Veröffentlichungstag der Anmeldung:
**27.01.2021 Patentblatt 2021/04**

(73) Patentinhaber: **MAUL KONSTRUKTIONEN GMBH**
**52146 Würselen (DE)**

(72) Erfinder: **MAUL, Hans-Erich**
**52146 Würselen (DE)**

(74) Vertreter: **Kohlmann, Kai**
**Donatusstraße 1**
**52078 Aachen (DE)**

(56) Entgegenhaltungen:
WO-A1-2008/079011   DE-U1-202011 106 149
DE-U1-202011 106 149   US-A1- 2017 234 066

- ROTH K: "EVOLVENTENVERZAHNUNGEN MIT EXTREMEN EIGENSCHAFTEN", ANTRIEBSTECHNIK, VEREINIGTE FACHVERLAGE, MAINZ, DE, Bd. 35, Nr. 7, 1. Juli 1996 (1996-07-01), Seiten 43-48, XP000598602, ISSN: 0722-8546

**Beschreibung**

Die Erfindung betrifft ein Planetengetriebe umfassend ein Sonnenrad, ein Hohlrad, Planetenräder und einen Planetenträger auf dem die Planetenräder drehbar angeordent sind, wobei das Sonnenrad, die Planetenräder und das Hohlrad eine Evoloidverzahnung aufweisen. Außerdem betrifft die Erfindung eine mehrstufige Planetengetriebeanordnung.

Planetengetriebe haben gegenüber anderen Getrieben zahlreiche Vorteile, insbesondere:

-   die kompakte, hochbelastbare Bauweise,
-   das gleichzeitige Tragen vieler Zähne,
-   die relativ hohe Übersetzung in einer Stufe und
-   die mehrstufige Anordnung durch Hintereinanderschalten mehrerer Planetengetriebe.

Aus der WO 2008/079011 A1 ist ein gattungsgemäßes Planetengetriebe mit hoher Übersetzung bekannt, das zwei Planetenräder und ein Sonnenrad mit einem Zahn oder zwei Zähnen aufweist, wobei das Sonnenrad, die Planetenräder und das Hohlrad eine Evoloidverzahnung aufweisen. Die Planetenräder sind bei diesem Getriebe gestellfest und der Abtrieb erfolgt über das Hohlrad. Die Übersetzung beträgt i=20:1

Der Nachteil des aus der WO 2008/079011 A1 bekannten Planetengetriebes mit hoher Übersetzung ist die geringere Belastbarkeit gegenüber der weit verbreiteten und bevorzugten Ausführung von Planetengetrieben mit drei Planetenrädern.

Planetengetriebe mit drei Planetenrädern haben weitere Vorteile, insbesondere

-   eine bessere Verteilung der Belastung auf eine größere Anzahl von Planetenrädern,
-   eine gleichmäßige Kraftübertragung in den Planetenträger über die an den Eckpunkten eines gleichseitigen Dreiecks liegenden Achsen der Planetenräder sowie
-   ein Zentrieren des Sonnenrades zum Hohlrad durch die von den Planetenrädern ausgeübten Kräfte.

Die Ausstattung des aus der WO 2008/079011 A1 bekannten Planetengetriebes mit drei Planetenrädern scheitert ab einer Übersetzung von etwa i=12:1 daran, dass die Planetenräder aneinander anstoßen und kollidieren würden.

Aus der DE 20 2011 106 149 U1 , auf welcher die zweiteilige Form beruht, ist ein Spindelantrieb zur motorischen Verstellung eines Verstellelements eines Kraftfahrzeugs bekannt. Der in Rede stehende Spindelantrieb kann für alle möglichen Verstellelemente eines Kraftfahrzeugs Anwendung finden, z.B. für eine Heckklappe oder einen Heckdeckel eines Kraftfahrzeugs. Dem Antriebsmotor des Spindelantriebs ist ein Drehzahl-Untersetzungsgetriebe nachgeschaltet. Das Drehzahl-Untersetzungsgetriebe weist ein Planetengetriebe auf, welches ein drehbares Sonnenrad und koaxial dazu einen drehbaren Planetenradträger und ein gestellfestes Hohlrad aufweist. Der Planetenradträger trägt vorzugsweise genau zwei drehbare Planetenräder, kann jedoch auch mehr als zwei Planetenräder aufweisen. Der Eingriff zwischen dem Sonnenrad und den beiden Planetenrädern des Planetenradträgers ist als Evoloid-Verzahnung ausgestaltet. Für ein Ausführungsbeispiel mit zwei Planetenrädern ist offenbart, dass das Sonnenrad als Evoloid-Zahnrad mit einer Ritzelzähnezahl = 1 ausgestaltet ist. Dabei verläuft der eine Ritzelzahn im Wesentlichen spiralförmig um die Sonnenradachse herum.

Ausgehend von diesem Stand der Technik liegt der Erfindung die Aufgabe zugrunde, ein gattungsgemäßes Planetengetriebe mit Evoloidverzahnung zu schaffen, welches eine hohe Belastbarkeit auch bei hohen Übersetzungen, insbesondere auch von i=24:1 ermöglicht.

Die Lösung basiert auf dem Gedanken, ein Planetengetriebe mit Evoloidverzahnung mit drei umlaufenden Planetenrädern auszustatten, die auch bei hohen Übersetzungen nicht aneinander anstoßen. Im Einzelnen wird die Aufgabe durch ein Planetengetriebe mit den Merkmalen des Anspruchs 1 gelöst.

Das lediglich einen Zahn aufweisende Sonnenrad trägt zu den hohen möglichen Übersetzungen bei.

Um den Planetenraddurchmesser zu reduzieren werden erfindungsgemäß eine starke Kopfkürzung und zusätzlich eine negative Profilverschiebung der Planetenräder vorgeschlagen. Der negative Profilverschiebungsfaktor x jedes Planetenrades liegt im Bereich von -0,2 bis -0,4. Der Kopfhöhenfaktor $h_{aP}$ des Planetenrades liegt im Bereich von 0,5 bis 0,7.

Zugleich erhält das Sonnenrad eine große positive Profilverschiebung und Kopfkürzung, so dass der Durchmesser des Sonnenrades größer wird. Der positive Profilverschiebungsfaktor x des Sonnenrades liegt im Bereich von 1,4 bis 1,6. Der Kopfhöhenfaktor $h_{aP}$ des Sonnenrades liegt im Bereich von 0,1 bis 0,2. Die Zähnezahl der Planetenräder kann aufgrund der Profilverschiebung und Kopfkürzung des Sonnenrades auf bis zu 11 Zähne erhöht werden.

Das innenverzahnte, gestellfeste Hohlrad erhält eine negative Profilverschiebung, wodurch sich der genutzte Teil der Verzahnung nach außen verschiebt. Der negative Profilverschiebungsfaktor x des Hohlrades liegt im Bereich von -0,8 bis -1,0. Der Kopfhöhenfaktor $h_{aP}$ des Hohlrades liegt im Bereich von 1,3 bis 1,5.

Das Bezugsprofil gebräuchlicher Zahnräder ist in der DIN 867 genormt.

Ein erfindungsgemäßes Planetengetriebe kann sehr hohe Abtriebsmomente übertragen bei sehr kleinem Bauraum. Ein Planetengetriebe gemäß der Erfindung hat beispielsweise einen Durchmesser von etwa 65mm und ein Modul von 1,75mm.

Bei einer Übersetzung von i=24:1 und einem Wirkungsgrad von 94% wird das Drehmoment in dem Planetengetriebe um den Faktor 22,56 erhöht. Dieser Faktor lässt sich mit bekannten Planetengetrieben nicht erreichen.

Jedes Planetenrad kämmt über eine erste Eingriffstrecke mit dem Hohlrad und über eine zweite Eingriffstrecke mit dem Sonnenrad. Wenn der Betriebseingriffswinkel der ersten Eingriffstrecke mit dem Betriebseingriffswinkel der zweiten Eingriffstrecke übereinstimmt, wird erreicht, dass der Wirkungsgrad des Planetengetriebes unabhängig davon, ob der Antrieb über die Sonne oder den Planetenträger (Steg) erfolgt, übereinstimmt.

Die übereinstimmenden Betriebseingriffswinkel werden durch symmetrische Gestaltung der Summen der Profilverschiebungen erreicht, d.h. die Summe der Profilverschiebungen für das Sonnenrad und ein Planetenrad entspricht betragsmäßig der Summe der Profilverschiebungen eines Planetenrades und des Hohlrades.

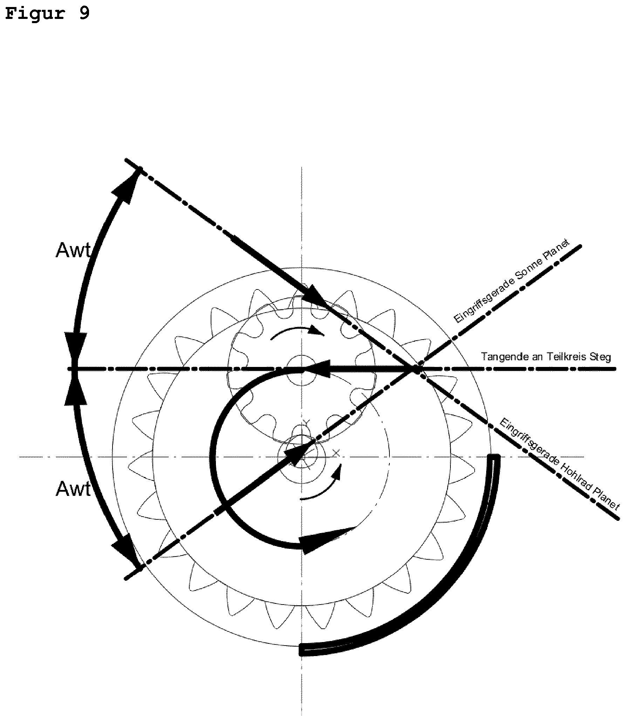

Durch diese Wahl der Verzahnungsparameter des Planetengetriebes liegt der Eingriff der kämmenden Zähne von dem Hohlrad und den Planetenrädern hinter dem Wälzpunkt und der Eingriff der kämmenden Zähne von Sonnenrad und den Planetenrädern vor dem Wälzpunkt, wie dies in der Figur 9 für eines der Planetenräder veranschaulicht ist.

Bei Antrieb des Planetengetriebes vom Sonnenrad begünstigt der vor dem Wälzpunkt liegende Eingriff die Drehung der Planetenräder durch progressive (stoßende) Reibung und der am Hohlrad hinter dem Eingriff liegende Wälzpunkt begünstigt das Ablaufen der Planetenräder am Hohlrad durch degressive (ziehende) Reibung.

Bei Antrieb am Planetenträger (Steg) begünstigt der vor dem Wälzpunkt liegende Eingriff die Drehung des Sonnenrades durch die progressive (stoßende) Reibung und der am Hohlrad hinter dem Eingriff liegende Wälzpunkt begünstigt das Ablaufen der Planetenräder am Hohlrad durch die degressive (ziehende) Reibung.

Der Antrieb des erfindungsgemäßen Planetengetriebes erfolgt üblicherweise über das Sonnenrad und der Abtrieb über den Planetenträger. Eine Rückdrehung vom Abtrieb aus ist jedoch ohne weiteres möglich, was insbesondere für Anwendungen im Automobilbau, beispielsweise für motorisch über ein Planetengetriebe angetriebene Karosserieklappen und Türen von Bedeutung sein kann.

Wegen des in Radialrichtung geringen Platzbedarfs, sind die Planetenräder vorzugsweise mittels Nadellagern auf dem Planetenträger drehbar gelagert. Das Sonnenrad verfügt über eine aus der Feinwerktechnik bekannte reibungsarme Spitzenlagerung, welche eine Rückdrehung des Planetengetriebes von der Abtriebsseite selbst bei sehr hohen Übersetzungen in mehrstufigen Planetengetriebeanordnungen erlaubt.

Der Schrägungswinkel der Evoloidverzahnung des Sonnenrades, der Planetenräder und des Hohlrades liegt vorzugsweise in einem Bereich von 30° bis 40°. Aus diesem Schrägungswinkel resultiert eine hohe Profilüberdeckung von etwa 2, die gute Laufeigenschaften des Getriebes bewirkt.

Die Übersetzung des erfindungsgemäßen Planetengetriebes ergibt sich aus

$$i = (z_{Hohlrad} / z_{Sonnenrad}) + 1$$

mit

 i = Übersetzung
 z = Zähnezahl.

Für eine Standardübersetzung des Planetengetriebes i = 24:1 beträgt die Anzahl der Zähne der Planetenräder z=11 und die Anzahl der Zähne des Hohlrades z=23. Ein solches Planetengetriebe hat bei guter Schmierung und der Verwendung geeigneter Materialien einen Wirkungsgrad oberhalb von 94%.

Eine zweistufige Getriebeanordnung umfassend zwei Planetengetriebe mit i=24:1 hat bei einer Gesamtübersetzung von 576:1 noch einen Wirkungsgrad oberhalb 88%. Eine dreistufige Getriebeanordnung umfassend drei Planetengetriebe mit i=24:1 hat bei einer Gesamtübersetzung von 13824:1 noch einen Wirkungsgrad oberhalb 83%.

Für eine Übersetzung des Planetengetriebes i = 6:1 beträgt die Anzahl der Zähne der Planetenräder z=2 und die Anzahl der Zähne des Hohlrades z=5. Das Planetengetriebe mit i= 6:1 hat die niedrigste Übersetzung, die mit einem Sonnenrad mit z=1 und gleichmäßiger Anordnung von drei Planetenrädern realisierbar ist.

Das Planetengetriebe mit i=6:1 kann im Modul bis auf 5,5 mm vergrößert werden. Dadurch steigt die Belastungsfähigkeit des Getriebes.

Zwischen dieser niedrigsten Übersetzung i=6:1 und der Standardübersetzung i=24:1 lassen sich Planetengetriebe mit der Übersetzung i = 12:1 realisieren, wobei die Anzahl der Zähne der Planetenräder z=5 und die Anzahl der Zähne des Hohlrades z=11 beträgt oder mit der Übersetzung i = 18:1, wobei die Anzahl der Zähne der Planetenräder z=8 und die Anzahl der Zähne des Hohlrades z=17 beträgt.

Die Abmessungen, insbesondere die Anschlussmaße der Planetengetriebe stimmen unabhängig von der gewählten Übersetzung vorzugsweise überein. Dies erlaubt es eine mehrstufige Planetengetriebeanordnung aus Planetengetrieben mit gleichen und/oder unterschiedlichen Übersetzungen modular zusammenzusetzen.

Sofern die Planetenräder zumindest der ersten Stufe nicht aus Stahl, sondern aus Kunststoff bestehen, reduziert dies die Geräuschentwicklung des Getriebes. Die übrigen Zahnräder bestehen aus Stahl.

Der Antrieb des Sonnenrades in jedem Planetengetriebe erfolgt über eine Antriebswelle, wobei sämtliche Antriebswellen in den verschiedenen Stufen der Planetengetriebeanordnung miteinander fluchten. Die Drehmomentübertragung zwischen den einzelnen Stufen erfolgt über eine Oldhamkupplung, wobei eine Feder an einem ersten Kupplungsteil und eine Feder an einem zweiten Kupplungsteil angeordnet sind, die in sich kreuzende Nuten einer Kupplungsscheibe eingreifen. Vorzugsweise ist eine der beiden Federn an der Stirnseite der Antriebswelle des Sonnenrades und eine Feder an dem Planetenträger der vorangehenden Stufe angeordnet. Die Oldham-Kupplung, im deutschen Sprachraum auch als Kreuzschlitzkupplung bezeichnet, ist eine nicht schaltbare, drehstarre Kupplung, die einen Radialversatz zweier paralleler Wellen ausgleichen kann.

Mit einem Planetengetriebe oder einer mehrstufigen Planetengetriebeanordnung umfassend bis zu drei erfindungsgemäße Planetengetriebe, die wahlweise eine der vorgenannten Übersetzungen i=6:1, 12:1, 18:1, 24:1 aufweisen, lassen sich nahezu sämtliche Gesamtübersetzungen von i=6:1 bis i= 13848:1 nach der arithmetischen Zahlenreihe mit einer Stufung von 6 realisieren.

Versuche mit Planetengetriebeanordnungen mit zwei Stufen mit einer Übersetzung von jeweils i=24:1, also einer Gesamtübersetzung von i=576:1, konnten relativ leicht, mit dem nicht bestromtem Antriebsmotor an der Antriebsseite von der Abtriebsseite her, zurückgedreht werden.

Nachfolgend wird die Erfindung anhand der Figuren näher erläutert. Es zeigen

**Figur 1**  eine Explosionsdarstellung eines erfindungsgemäßen Planetengetriebes mit einer Übersetzung i= 24:1,

**Figur 2**  einen Längsschnitt durch eine zweistufige Planetengetriebeanordnung,

**Figur 3**  einen Längsschnitt durch ein Planetengetriebe gemäß Figur 1

**Figur 4**  eine Explosionsdarstellung eines weiteren Ausführungsbeispiels eines erfindungsgemäßen Planetengetriebes mit einer Übersetzung i=6:1,

**Figur 5**  ein Hohlrad, ein Planetenrad sowie ein Sonnenrad eines Planetengetriebes nach Figur 4,

**Figur 6**  ein Hohlrad eines Planetengetriebes nach Figur 1,

**Figur 7**  ein Planetenrad aus Kunststoff für ein Planetengetriebe nach Figur 1,

**Figur 8**  ein Sonnenrad für ein erfindungsgemäßes Getriebe mit Antriebswelle und

**Figur 9**  eine Darstellung zur Veranschaulichung der Betriebseingriffswinkel zwischen den Planetenrädern und dem Hohlrad einerseits und den Planetenrädern und dem Sonnenrad andererseits eines erfindungsgemäßen Planetengetriebes.

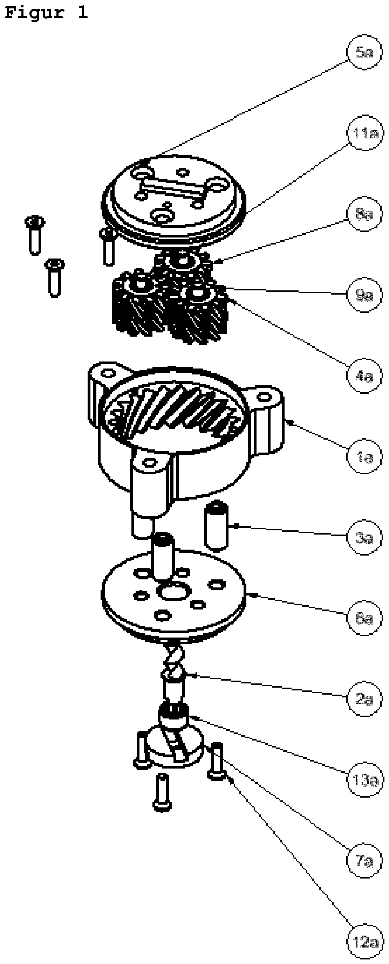

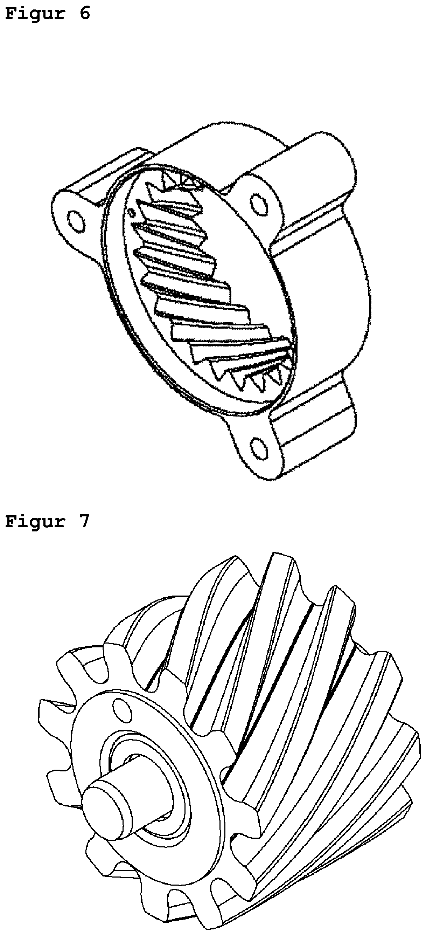

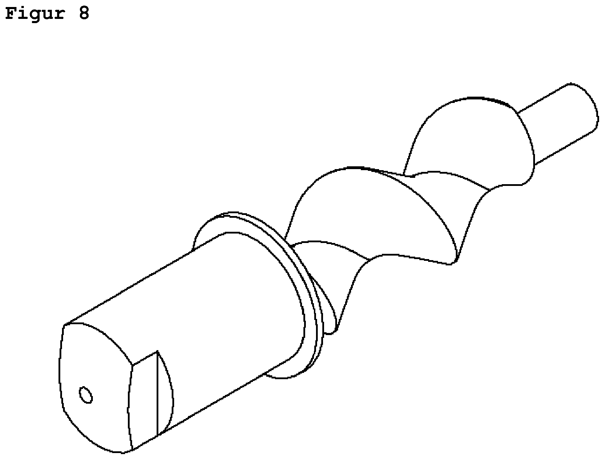

Das Planetengetriebe nach Figur 1 umfasst ein Sonnenrad (2a), ein gestellfestes Hohlrad (1a), drei Planetenräder (8a) sowie einen Planetenträger (4a). Das Hohlrad (1a) ist im Detail in Figur 6, das Planetenrad (8a) im Detail in Figur 7 und das Sonnenrad (2a) im Detail in Figur 8 dargestellt. Das lediglich einen Zahn aufweisende Sonnenrad (2a) ist drehfest auf einer Antriebswelle angeordnet und kämmt mit den drei Planetenrädern (8a), die jeweils elf Zähne aufweisen. In dem dargestellten Ausführungsbeispiel sind die Planetenräder (8a) zur Geräuschminderung aus Kunststoff gefertigt. Jedes Planetenrad (8a) ist über ein Lager (9a) um einen Zylinderstift (11a) drehbar gelagert. Die Zylinderstifte erstrecken sich zwischen zwei im parallelen Abstand zueinander angeordneten Planetenträgerscheiben (5a, 6a) des Planetenträgers (4a). Die an beiden Seiten über die Planetenräder (8a) hinausragenden Zylinderstifte (11a) greifen in miteinander fluchtende Aufnahmeöffnungen in den Planetenträgerscheiben (5a, 6a) ein.

Die beiden Planetenträgerscheiben (5a, 6a) des Planetenträgers (4a) werden darüber hinaus durch Hohlstützteile (3a) auf Abstand gehalten. Die Hohlstützteile (3a) sind hohlzylindrisch und weisen an beiden Seiten Innengewinde zur Aufnahme von Schrauben (12a) auf. Durch entsprechende Bohrungen in den Planetenträgerscheiben (5a, 6a) des Planetenträgers greifen die Schrauben (12a) durch die Planetenträgerscheibe hindurch in die Innengewinde der Hohlstützteile (3a).

Die antriebsseitige Planetenträgerscheibe (6a) weist eine zentrale Bohrung zur Aufnahme einer Lagerhülse (13a) auf, die die Antriebswelle des Sonnenrades (2a) drehbar in der unteren Planetenträgerscheibe (6a) lagert.

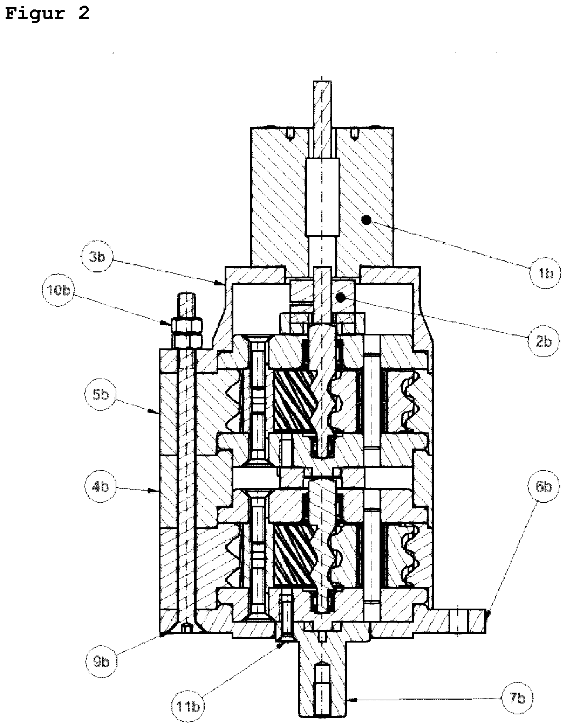

Der Antrieb des Planetengetriebes erfolgt über eine Oldhamkupplung umfassend eine Kupplungsscheibe (7a) mit zwei sich auf gegenüberliegenden Seiten der Kupplungsscheibe kreuzenden Nuten. An der Antriebswelle des Sonnenrades (2a) ist stirnseitig eine Feder ausgeformt, die in die auf der Oberseite der Kupplungsscheibe (7a) eingebrachte Nut eingreift. In die gegenüberliegende Nut der Kupplungsscheibe (7a) greift eine ebenfalls stirnseitig eine ausgeformte Feder aufweisende Antriebswelle eines in Figur 1 nicht dargestellten Motors (1b) (vgl. Figur 2).

Der Planetenträger (4a) ist in dem gestellfesten Hohlrad (1a) drehbar gelagert. Am Außenmantel des Hohlrades (1a) sind drei um 120 Grad über den Umfang versetzt zueinander angeordnete Halter angeordnet, die jeweils Durchgänge zur Aufnahme von Schrauben aufweisen, um mehrere von den Abmessungen und Anschlussmaßen übereinstimmende Planetengetriebe in einer mehrstufigen Planetengetriebeanordnung mechanisch miteinander zu verbinden. Die Durchgänge in den Haltern erstrecken sich in Längsrichtung des Planetengetriebes sowie parallel zu den Drehachsen der in einer Ebene liegenden Zahnräder jedes Planetengetriebes.

Figur 2 zeigt eine zweistufige Planetengetriebeanordnung, die aus zwei Planetengetrieben gemäß Figur 1 wie folgt zusammengesetzt ist:

Der elektrische Motor (1b) ist über einen Motoradapter (3b) stirnseitig mit der ersten Planetenstufe (5b) verbunden. Der Motoradapter (3b) weist ebenfalls jeweils um 120 Grad versetzt zueinander Halter auf, die jeweils einen Durchgang für eine Schraube aufweisen. Die Durchgänge in den drei Haltern des Motoradapters (3b) fluchten mit den Durchgängen in den Haltern des Hohlrades (1a).

Hinter der ersten Planetenstufe (5b) befindet sich ein Adapter (4b), der zwischen der ersten Planetenstufe (5b) und der zweiten Planetenstufe (5b) angeordnet ist. Mittels des Adapters (4b) wird der erforderliche Raum zwischen den Stufen geschaffen, um den Abtrieb des Planetengetriebes der ersten Stufe mit dem Antrieb des Planetengetriebes in der zweiten Stufe zu koppeln. Die Kopplung erfolgt über eine Oldhamkupplung umfassend eine Kupplungsscheibe (7a). Die Kupplungsscheibe (7a) stimmt mit der Kupplungsscheibe (7a) überein, die den Motor (1b) mit der Antriebswelle des Sonnenrades (2a) der ersten Stufe koppelt.

Die abtriebsseitige Planetenträgerscheibe (5a) (vgl. Figur 1) des Planetengetriebes in der ersten Stufe weist an ihrer nach außen weisenden Oberfläche eine Feder auf, die in eine der beiden Nuten der Kupplungsscheibe (7a) eingreift. In die auf der gegenüberliegenden Seite der Kupplungsscheibe (7a) eingelassene Nut greift die an der Antriebswelle stirnseitig ausgeformte Feder der Antriebswelle des Sonnenrades (2a) der zweiten Stufe ein.

Die stirnseitig angeformte Feder der Antriebswelle der zweiten Stufe stimmt mit der stirnseitig angeformten Feder der Antriebswelle der ersten Stufe geometrisch überein. Die abtriebsseitige Planetenträgerscheibe des Planetengetriebes in der zweiten Stufe weist an ihrer nach außen weisenden Oberfläche eine mit der Feder der ersten Getriebestufe geometrisch übereinstimmende Feder auf. Aufgrund der vorzugsweise geometrisch vollständig übereinstimmenden An- und Abtriebe sämtlicher Planetenstufen sowie der geometrisch übereinstimmenden gestellfesten Gehäuse (Sonnenrad) einschließlich der Halter lassen sich erfindungsgemäß mehrere Planetengetriebe mit gleichen und/oder unterschiedlichen Übersetzungen in einer mehrstufigen Planetengetriebeanordnung nach Figur 2 hintereinanderschalten.

Am Ausgang der zweiten Planetenstufe (5b) befindet sich ein Abschlussdeckel, dessen am Umfang angeordnete Halter (6b) mit den Haltern an den Hohlrädern der beiden Planetenstufen (5b), den Haltern am Motoradapter (3b) und den Haltern an zwischen den beiden Planetenstufen (5b) angeordneten Adapter (4b) korrespondieren. Die Durchgänge in den jeweils drei korrespondierenden Haltern fluchten miteinander, um Schrauben (9b) aufzunehmen.

Der Abschlussdeckel weist mittig einen Durchgang auf, durch den sich ein Abtriebsmitnehmer (7b) erstreckt, der abtriebsseitig an dem Planetenträger der zweiten Stufe mittels Schrauben (11b) befestigt ist. Die Abtriebsmomente der Planetengetriebeanordnung werden auf den Abtriebsmitnehmer (7b) übertragen, indem die Feder an der abtriebsseitigen Planetenträgerscheibe (5a) in eine Nut in dem Abtriebsmitnehmer (7b) eingreift.

Der Motor, die beiden Planetenstufen sowie die dazwischen angeordneten Adapter und der Abschlussdeckel der Planetengetriebeanordnung werden mit drei Schrauben (9b) verbunden. Die drei Schrauben (9b) durchsetzen die miteinander fluchtenden Durchgänge in den Haltern (6b) ausgehend von dem Abschlussdeckel und sind an dem gegenüberliegenden Motoradapter durch Muttern (10b) gesichert.

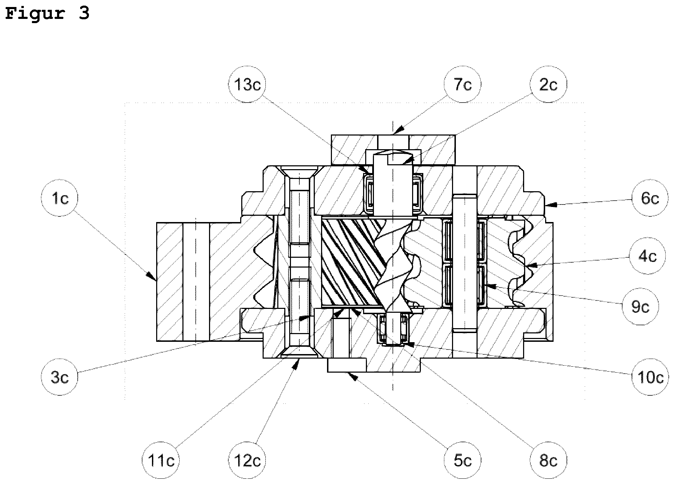

Figur 3 zeigt einen Schnitt durch ein Planetengetriebe entsprechend Figur 1. Gleiche Bauteile sind mit gleichen Ziffern jedoch unterschiedlichen Buchstaben versehen.

Insbesondere ist aus der Schnittdarstellung die Lagerung der Antriebswelle des Sonnenrades (2c) erkennbar. Antriebsseitig ist die Antriebswelle mittels einer Lagerhülse (13c) in der Planetenträgerscheibe (6c) des Planetenträgers (4c) gelagert. Abtriebsseitig ist die Antriebswelle in einem Spitzenlager (10c) in der abtriebsseitigen Planetenträgerscheibe (5c) gelagert.

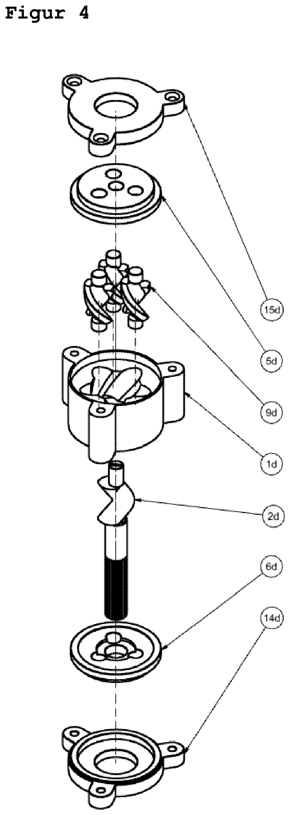

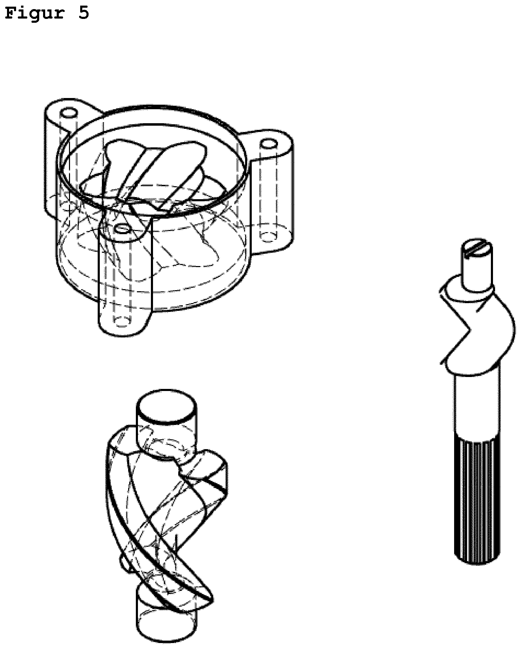

Figur 4 zeigt in Verbindung mit Figur 5 eine Explosionsdarstellung eines erfindungsgemäßen Planetengetriebes mit einer Übersetzung i=1:6. Übereinstimmende Bauteile wie bei dem Ausführungsbeispiel nach Figur 1 sind mit übereinstimmenden Ziffern jedoch abweichenden Buchstaben gekennzeichnet. Das Sonnenrad (2d) sitzt auf einer Antriebswelle, deren antriebsseitiger Abschnitt sich durch die antriebsseitige Planetenträgerscheibe (6d) hindurch erstreckt und beispielsweise mit einem nicht dargestellten Motor drehfest verbunden ist. Der abtriebsseitige über das Sonnenrad (2d) hinausragende Wellenabschnitt ist in einer zentralen Bohrung der abtriebsseitigen Planetenträgerscheibe (5d) drehbar gelagert.

Die Planetenräder weisen ebenfalls jeweils auf beiden Seiten des Planetenrades Wellenstümpfe auf, die in entsprechenden Lagern in der antriebsseitigen Planetenträgerscheibe (6d) und der abtriebsseitigen Planetenträgerscheibe (5d) aufgenommen werden. Das Hohlrad (1d) weist an beiden Stirnseiten der Innenverzahnung einen umlaufenden Steg auf, auf dem die antriebs- bzw. abtriebsseitige Planetenträgerscheibe (5d, 6d) drehbar gelagert ist. In axialer Richtung des Planetengetriebes werden die Planetenträgerscheiben (5d, 6d) jeweils zwischen einem der beiden umlaufenden Stege und einen Deckel (14d, 15d) gesichert. Die Befestigung der beiden Deckel (14d, 15d) an dem gestellfesten Hohlrad (1d) erfolgt über die am äußeren Mantel des Hohlrades befestigten Halter, deren Durchgänge mit entsprechenden Durchgängen an Haltern der beiden Deckel (14d, 15d) fluchten. Die Durchgänge dienen zur Aufnahme von in Figur 4 nicht dargestellten Schrauben, die die beiden Deckel mit dem Hohlrad verbinden. Der Abtrieb kann beispielsweise durch einen drehfest in die zentrale Bohrung in der Planetenträgerscheibe (5d) eingesetzten Stift erfolgen.

Ein optimal verzahntes Planetengetriebe gemäß der vorliegenden Erfindung weist für das Sonnenrad einen positiven Profilverschiebungsfaktor von +1,52 für die Planetenräder einen negativen Profilverschiebungsfaktor von -0,32, für das Hohlrad einen negativen Profilverschiebungsfaktor von -0,88 sowie einen Kopfhöhenfaktor für das Sonnenrad von 0,165 $h_{aP}$ für das Planetenrad einen Kopfhöhenfaktor von 0,672 $h_{aP}$ und für das Hohlrad einen Kopfhöhenfaktor von 1,391 $h_{aP}$ auf. Der Schrägungswinkel der Evoloidverzahnung sämtlicher Zahnräder beträgt etwa 36 Grad.

## Bezugzeichenliste

| Figur 1 | | Figur 3 | |
|---|---|---|---|
| 1a | Hohlrad | 1c | Hohlrad |
| 2a | Sonnenrad | 2c | Sonnenrad |
| 3a | Hohlstützteil | 3c | Hohlstützteil |
| 4a | Planetenträger | 4c | Planetenträger |
| 5a | Planetenträgerscheibe | 5c | Planetenträgerscheibe |
| 6a | Planetenträgerscheibe | 6c | Planetenträgerscheibe |
| 7a | Kupplungsscheibe | 7c | Kupplungsscheibe |
| 8a | Planetenrad | 8c | Planetenrad |
| 9a | Lager Planetenrad | 9c | Lager Planetenrad |
| 10a | Lager | 10c | Spitzenlager Sonnenrad |
| 11a | Zylinderstift | 11c | Zylinderstift |
| 12a | Schraube | 12c | Schraube |
| 13a | Lagerhülse | 13c | Lagerhülse |

| Figur 2 | | Figur 4 | |
|---|---|---|---|
| 1b | Motor | | |
| 2b | Oldhamkupplung | 1d | Hohlrad |
| 3b | Motoradapter | 2d | Sonnenrad |
| 4b | Adapter | 5d | Planetenträgerscheibe |
| 5b | Planetenstufe | 6d | Planetenträgerscheibe |
| 6b | Halter Adapter | 9d | Planetenrad |
| 7b | Abtriebsmitnehmer | 14d | Deckel |
| 9b | Schraube | 15d | Deckel |
| 10b | Mutter | | |
| 11b | Schraube | | |

## Patentansprüche

1. Planetengetriebe umfassend

    - ein Sonnenrad (2a,c),
    - ein Hohlrad (1a,c),

- Planetenräder (8a,c) und
- einen Planetenträger (4a,c) auf dem die Planetenräder (8a,c) drehbar angeordnet sind,
- wobei das Sonnenrad (2a,c), die Planetenräder (8a,c) und das Hohlrad (1a,c) eine Evoloidverzahnung aufweisen,
- das Hohlrad (1a,c) gestellfest ist,
- die Anzahl der Zähne des Sonnenrades (2a,c) z=1 beträgt,

**dadurch gekennzeichnet, dass**

- das Planetengetriebe drei Planetenräder (8a,c) aufweist,
- der positive Profilverschiebungsfaktor x des Sonnenrades (1a, c) im Bereich von 1,4 bis 1,6 liegt,
- der negative Profilverschiebungsfaktor x jedes Planetenrades (8a, c) im Bereich von -0,2 bis -0,4 liegt,
- der negative Profilverschiebungsfaktor x des Hohlrades (1a, c)) im Bereich von -0,8 bis -1,0 liegt,
- der Kopfhöhenfaktor $h_{aP}$ des Sonnenrades (2a, c) im Bereich von 0,1 bis 0,2 liegt,
- der Kopfhöhenfaktor $h_{aP}$ des Planetenrades (8a, c) im Bereich von 0,5 bis 0,7 liegt und
- der Kopfhöhenfaktor $h_{aP}$ des Hohlrades (1a, c) im Bereich von 1,3 bis 1,5 liegt.

2. Planetengetriebe nach Anspruch 1, **dadurch gekennzeichnet, dass**

   - die Planetenräder (8a, c) über eine erste Eingriffstrecke mit dem Hohlrad (1a, c) und über eine zweite Eingriffstrecke mit dem Sonnenrad (2a, c) kämmen und
   - der Betriebseingriffswinkel der ersten Eingriffstrecke mit dem Betriebeseingriffswinkel der zweiten Eingriffstrecke übereinstimmt.

3. Planetengetriebe nach Anspruch 1, **dadurch gekennzeichnet, dass** die Planetenräder (8c) mittels Nadellagern (9c) auf dem Planetenträger (4c) drehbar gelagert sind.

4. Planetengetriebe nach einem der Ansprüche 1 bis 3, **dadurch gekennzeichnet, dass** der Schrägungswinkel der Evoloidverzahnung des Sonnenrades (2a,c), der Planetenräder (8a, c) und des Hohlrades (1a, c) übereinstimmt und im Bereich von 30° bis 40° liegt.

5. Planetengetriebe nach einem der Ansprüche 1 bis 4, **dadurch gekennzeichnet, dass** die Übersetzung des Planetengetriebes i = 6:1 ist, wobei die Anzahl der Zähne der Planetenräder z=2 und die Anzahl der Zähne des Hohlrades (1d) z=5 beträgt.

6. Planetengetriebe nach einem der Ansprüche 1 bis 4, **dadurch gekennzeichnet, dass** die Übersetzung des Planetengetriebes i = 12:1 ist, wobei die Anzahl der Zähne der Planetenräder z=5 und die Anzahl der Zähne des Hohlrades z=11 beträgt.

7. Planetengetriebe nach einem der Ansprüche 1 bis 4, **dadurch gekennzeichnet, dass** die Übersetzung des Planetengetriebes i = 18:1 ist, wobei die Anzahl der Zähne der Planetenräder z=8 und die Anzahl der Zähne des Hohlrades z=17 beträgt.

8. Planetengetriebe nach einem der Ansprüche 1 bis 4, **dadurch gekennzeichnet, dass** die Übersetzung des Planetengetriebes i = 24:1 ist, wobei die Anzahl der Zähne der Planetenräder (8a) z=11 und die Anzahl der Zähne des Hohlrades (1a) z=23 beträgt.

9. Mehrstufige Planetengetriebeanordnung umfassend mindestens zwei Planetengetriebe nach einem der Ansprüche 1 bis 8.

10. Mehrstufige Planetengetriebeanordnung nach Anspruch 9, **dadurch gekennzeichnet, dass** der Antrieb jedes Planetengetriebes über das Sonnenrad (2a, c) und der Abtrieb über den Planetenträger (4a, c) erfolgt.

11. Mehrstufige Planetengetriebeanordnung nach Anspruch 10, **dadurch gekennzeichnet, dass** der Antrieb des Sonnenrades (2a, c) in jedem Planetengetriebe über eine Antriebswelle erfolgt und sämtliche Antriebswellen miteinander fluchten.

**12.** Mehrstufige Planetengetriebeanordnung nach Anspruch 11,
**dadurch gekennzeichnet, dass** die Planetengetriebe über eine Oldhamkupplung (2b) miteinander verbunden sind.

**13.** Mehrstufige Planetengetriebeanordnung nach Anspruch 11,
**dadurch gekennzeichnet, dass**

- bei jedem Planetengetriebe an der Antriebswelle des Sonnenrades stirnseitig drehfest eine Feder und an einer Abtriebsseite des Planetenträgers eine Feder drehfest angeordnet sind,
- die Oldhamkupplung (2b) eine Kupplungsscheibe (7a, c) mit zwei sich auf gegenüberliegenden Seiten der Kupplungsscheibe (7a, c) kreuzenden Nuten umfasst,
- wobei in die sich kreuzenden Nuten die Feder einer Antriebswelle und die Feder eines Planetenträgers (4a, 4c) von miteinander zu kuppelnden Planetengetrieben eingreifen.

**Claims**

**1.** Planetary gearing comprising

- a sun gear (2a, c),
- a ring gear (1a, c),
- planetary gears (8a, c) and
- a planetary carrier (4a, c) on which the planetary gears (8a, c) are rotatably arranged,
- wherein the sun gear (2a, c), the planetary gears (8a, c) and the ring gear (1a, c) comprise an evoloid toothing,
- the ring gear (1a, c) is fixed to the frame,
- the number of teeth of the sun gear (2a, c) is z=1,

**characterized in that**

- the planetary gearing comprises three planetary gears (8a, c),
- the positive profile shift factor x of the sun gear (1a, c) is within the range of 1.4 to 1.6,
- the negative profile displacement factor x of each planetary gear (8a, c) is within the range of -0.2 to -0.4,
- the negative profile displacement factor x of the ring gear (1a, c) is within the range of -0.8 to -1.0,
- the head height factor $h_{aP}$ of the sun gear (2a, c) is within the range of 0.1 to 0.2,
- the head height factor $h_{aP}$ of the planetary gear (8a, c) is within the range of 0.5 to 0.7 and
- the head height factor $h_{aP}$ of the ring gear (1a, c) is in the range of 1.3 to 1.5.

**2.** Planetary gearing according to claim 1, **characterized in that**

- the planetary gears (8a, c) comb across a first path of contact with the ring gear (1a, c) and across a second path of contact with the sun gear (2a, c), and
- the operating meshing angle of the first path of contact corresponds to the operating meshing angle of the second path of contact.

**3.** Planetary gearing according to Claim 1, **characterized in that** the planetary gears (8c) are rotatably mounted on the planetary carrier (4c) by means of needle bearings (9c).

**4.** Planetary gearing according to any one of the Claims 1 to 3, **characterized in that** the helix angle of the evoloid toothing of the sun gear (2a, c), the planetary gears (8a, c) and the ring gear (1a, c) coincides and is within the range of 30° to 40°.

**5.** Planetary gearing according to any one of the Claims 1 to 4, **characterized in that** the gear ratio of the planetary gear is i = 6:1, wherein the number of teeth of the planetary gears is z = 2 and the number of teeth of the ring gear (1d) is z = 5.

**6.** Planetary gearing according to any one of the Claims 1 to 4, **characterized in that** the gear ratio of the planetary gear is i = 12:1, wherein the number of teeth of the planetary gears is z = 5 and the number of teeth of the ring gear is z = 11.

7. Planetary gearing according to any one of the Claims 1 to 4, **characterized in that** the gear ratio of the planetary gear is i = 18:1, wherein the number of teeth of the planetary gears is z = 8 and the number of teeth of the ring gear is z = 17.

8. Planetary gearing according to any one of the Claims 1 to 4, **characterized in that** the gear ratio of the planetary gear is i = 24:1, wherein the number of teeth of the planetary gears (8a) is z = 11 and the number of teeth of the ring gear (1a) is z = 23.

9. Multi-stage planetary gearing assembly comprising at least two planetary gears according to one of the Claims 1 to 8.

10. Multi-stage planetary gearing assembly according to Claim 9, **characterized in that** the drive of each planetary gear is run via the sun gear (2a, c) and the output is run via the planetary carrier (4a, c).

11. Multi-stage planetary gearing assembly according to Claim 10, **characterized in that** the drive of the sun gear (2a, c) is run in each planetary gear via a drive shaft and all drive shafts are aligned with each other.

12. Multi-stage planetary gearing assembly according to Claim 11, **characterized in that** the planetary gears are connected to each other via an Oldham coupling (2b) .

13. Multi-stage planetary gearing assembly according to Claim 11, **characterized in that**

- in the case of each planetary gearing, a spring is fixed on the front side of the drive shaft of the sun gear in a torque-proof manner and a spring is fixed on an output side of the planetary carrier in a torque-proof manner,
- the Oldham clutch (2b) comprises a clutch disc (7a, c) with two grooves intersecting on opposite sides of the clutch disc (7a, c), wherein the spring of a drive shaft and the spring of a planetary carrier (4a, 4c) of planetary gearings to be coupled interlock in the intersecting grooves.

**Revendications**

1. Engrenage planétaire comprenant

- une roue solaire (2a, c),
- une couronne (1a, c),
- des roues planétaires (8a, c) et
- un porte-satellites (4a, c) sur lequel les roues planétaires (8a, c) sont placées en rotation,
- la roue solaire (2a, c), les roues planétaires (8a, c) et la couronne (1a, c) comportant une denture évoloïde,
- la couronne (1a, c) étant solidaire,
- le nombre de dents de la roue solaire (2a, c) étant de z = 1,

**caractérisé en ce que**

- l'engrenage planétaire comporte trois roues planétaires (8a, c),
- le coefficient de décalage de profil positif x de la roue solaire (1a, c) se situe dans l'ordre de 1,4 à 1,6,
- le coefficient de décalage de profil négatif x de chaque roue planétaire (8a, c) se situe d'ans l'ordre de -0,2 à -0,4,
- le coefficient de décalage de profil négatif x de la couronne (1a, c) se situe dans l'ordre de -0,8 à -1,0,
- le coefficient de décalage unitaire $h_{aP}$ de la roue solaire (2a, c) se situe dans l'ordre de 0,1 à 0,2,
- le coefficient de décalage unitaire $h_{aP}$ de la roue planétaire (8a, c) se situe dans l'ordre de 0,5 à 0,7, et
- le coefficient de décalage unitaire $h_{aP}$ de la couronne (1a, c) se situe dans l'ordre de 1,3 à 1,5.

2. Engrenage planétaire selon la revendication 1, **caractérisé en ce que**

- les roues planétaires (8a, c) s'engrènent par l'intermédiaire d'un premier trajet d'engagement avec la couronne (1a, c) et par l'intermédiaire d'un deuxième trajet d'engagement avec la roue solaire (2a, c), et
- l'angle d'attaque fonctionnel du premier trajet d'engagement concorde avec l'angle d'attaque fonctionnel du deuxième trajet d'engagement.

3. Engrenage planétaire selon la revendication 1, **caractérisé en ce que** les roues planétaires (8c) sont logées en rotation à l'aide de roulements à aiguilles (9c) sur le porte-satellites (4c).

4. Engrenage planétaire selon l'une quelconque des revendications 1 à 3, **caractérisé en ce que** l'angle d'hélice de la denture évoloïde de la roue solaire (2a, c), des roues planétaires (8a, c) et de la couronne (1a, c) concordent et se situent dans l'ordre de 30° à 40°.

5. Engrenage planétaire selon l'une quelconque des revendications 1 à 4, **caractérisé en ce que** le rapport de transmission de l'engrenage planétaire i = 6 : 1, le nombre de dents des roues planétaires étant de z = 2 et le nombre de dents de la couronne (1d) étant de z = 5.

6. Engrenage planétaire selon l'une quelconque des revendications 1 à 4, **caractérisé en ce que** le rapport de transmission de l'engrenage planétaire i = 12 : 1, le nombre de dents des roues planétaires étant de z = 5 et le nombre de dents de la couronne étant de z = 11.

7. Engrenage planétaire selon l'une quelconque des revendications 1 à 4, **caractérisé en ce que** le rapport de transmission de l'engrenage planétaire i = 18 : 1, le nombre de dents des roues planétaires étant de z = 8 et le nombre de dents de la couronne étant de z = 17.

8. Engrenage planétaire selon l'une quelconque des revendications 1 à 4, **caractérisé en ce que** le rapport de transmission de l'engrenage planétaire i = 24 : 1, le nombre de dents des roues planétaires (8a) étant de z = 11 et le nombre de dents de la couronne (1a) étant de z = 23.

9. Dispositif d'engrenages planétaires à plusieurs comprenant au moins deux engrenages planétaires selon l'une quelconque des revendications 1 à 8.

10. Dispositif d'engrenages planétaires à plusieurs étages selon la revendication 9, **caractérisé en ce que** l'entraînement de chaque engrenage planétaire s'effectue par l'intermédiaire de la roue solaire (2a, c) et la sortie s'effectue par l'intermédiaire du porte-satellites (4a, c).

11. Dispositif d'engrenages planétaires à plusieurs étages selon la revendication 10, **caractérisé en ce que** l'entraînement de la roue solaire (2a, c) dans chaque engrenage planétaire s'effectue par l'intermédiaire d'un arbre d'entraînement et tous les arbres d'entraînement sont alignés les uns sur les autres.

12. Dispositif d'engrenages planétaires à plusieurs étages selon la revendication 11, **caractérisé en ce que** les engrenages planétaires sont reliés l'un à l'autre par l'intermédiaire d'un joint d'Oldham (2b).

13. Dispositif d'engrenages planétaires à plusieurs étages selon la revendication 11, **caractérisé en ce que**

- sur chaque engrenage planétaire, un ressort est placé en face frontale de l'arbre d'entraînement de la roue solaire et un ressort est placé de manière solidaire en rotation sur le côté de sortie du porte-satellites,
- le joint d'Oldham (2b) comprend un disque d'embrayage (7a, c) doté de deux rainures se croisant sur les côtés opposés du disque d'embrayage (7a, c),
- dans les rainures qui se croisent s'engrenant le ressort d'un arbre d'entraînement et le ressort d'un porte-satellites (4a, 4c) d'engrenages planétaires qui doivent être accouplés l'un avec l'autre.

## Figur 1

Figur 2

Figur 3

Figur 4

Figur 5

Figur 6

Figur 7

Figur 8

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008079011 A1
- DE 202011106149 U1